# EUROPÄISCHE PATENTSCHRIFT

(11) **EP 0 697 540 B1**
(45) Veröffentlichungstag und Bekanntmachung des Hinweises auf die Patenterteilung: **29.09.1999**
(21) Anmeldenummer: 95111924.7
(22) Anmeldetag: 28.07.1995
(51) Int. Cl.: F16F 9/02, F01L 1/46, F16F 9/36

(54) **Pneumatische Feder, insbesondere für Gaswechselventile von Brennkraftmaschinen**
Pneumatic spring, especially for the gas exchange valves of internal combustion engines
Ressort pneumatique, notamment pour les soupapes d'échange gazeux de moteurs à combustion interne

(30) Priorität: 12.08.1994 DE 4428677
(43) Veröffentlichungstag der Anmeldung: 21.02.1996
(73) Patentinhaber: Bayerische Motoren Werke Aktiengesellschaft, 80788 München (DE)
(72) Erfinder: Schulz, Ulrich, D-80999 München (DE)

(56) Entgegenhaltungen:
- EP-A- 0 622 135
- CH-A- 671 808
- DE-A- 3 814 568
- FR-A- 1 227 839
- FR-E- 3 847
- GB-A- 392 294
- GB-A- 2 122 721
- US-A- 1 695 011
- MTZ MOTORTECHNISCHE ZEITSCHRIFT, Bd. 50, Juli 1989 - August 1989 Seite 305
- PATENT ABSTRACTS OF JAPAN vol. 015 no. 049 (M-1078) ,6.Februar 1991 & JP-A-02 283811 (HONDA MOTOR CO LTD) 21.November 1990,

## Beschreibung

Die Erfindung geht gemäß dem Oberbegriff des Patentanspruches 1 von der GB-A-392 294 aus.

Weiter ist aus der US 1 695 011 eine pneumatische Feder für einen Brennkraftmaschinen-Ventiltrieb bekannt, bei der anstelle der bekannten Ein-Kammer-Ausführung zahlreiche, konzentrisch um den Ventilschaft angeordnete Kolben-Zylinder-Einheiten vorgesehen sind. Für diese bekannte pneumatische Feder ist zwar eine vom Einsatzort der Feder unabhängige Prüfung auf Dichtheit und Funktion denkbar, nachteilig jedenfalls sind neben dem hohen Bauaufwand vor allem die hohen Reibkräfte.

Der Erfindung liegt die Aufgabe zugrunde, eine pneumatische Feder der gattungsgemäßen Ein-Kammer-Bauart derart zu verbessem, daß eine vom Einsatzort der Feder unabhängige Prüfung auf Dichtheit und Funktion erreicht ist, wobei der Gasraum hinsichtlich seines Volumens optimiert ist.

Diese Aufgabe ist mit dem Patenanspruch 1 gelöst. Mit der Erfindung ist in vorteilhafter Weise ohne Einsatz der Betätigungsstange bzw. des Ventilschaftes eines Hubventils eine pneumatische Feder als eine Funktionseinheit in einer gegen die Umgebung abgeschlossenen Ein-Kammer-Bauart erzielt, die fem vom Einsatzort auf Dichtheit und Funktion geprüft werden kann.

Vorteilhafte Ausgestaltungen der Erfindung sind in den Unteransprüchen angegeben.

Die Erfindung ist anhand von drei Gruppen unterschiedlicher Ausführungsbeispiele mit möglichen Kolben-Dichtungsanordnungen beschrieben. Es zeigt
- Figuren 1a, 1b, 1c: jeweils eine pneumatische Feder mit einem in den zylinderseitigen Rohrabschnitt ein- und ausfahrend angeordneten kolbenseitigen Rohrabschnitt und
- Figuren 2a, 2b: jeweils eine pneumatische Feder, bei der ein zylinderseitiger Rohrabschnitt in den kolbenseitigen Rohrabschnitt ein- und ausfahrend angeordnet ist,
- Figur 3: eine pneumatische Feder mit Kolbenvariationen für eine vereinfachte Bearbeitung eines Rohrabschnittes.

Eine pneumatische Feder 1 zur Rückstellung eines von einer Steuerwelle 2 betätigten Hubventiles 3 für den Gaswechsel einer nicht näher gezeigten Brennkraftmaschine 4 umfaßt einen maschinenseitig angeordneten, topfartigen Zylinder 5 und einen mit dem Ventilschaft 6 des Hubventiles 3 antriebsfest verbundenen, topfartigen Kolben 7. Unter Zwischenschaltung einer Dichtung 8 begrenzen die mit ihren offenen Enden einander zugewandt angeordneten Kolben 7 und Zylinder 5 eine Kammer 9 für ein kompressibles Gas, das beispielsweise über eine Leitung 10 zugeführt und über eine Druckbegrenzungseinrichtung in einer Leitung 11 auf einem vorbestimmten Druckniveau gehalten ist.

Neben der vorbeschriebenen äußeren Begrenzung der Kammer 9 der pneumatischen Feder 1 umfaßt diese weiter eine innere Begrenzung, die aus an Zylinder 5 und Kolben 7 angeordneten, teleskopartig zusammenwirkenden Rohrabschnitten 12 und 13 gebildet ist. Diese dienen dazu, den eine kammerseitige Stirnwand 14 des Zylinders 5 zur antriebsfesten Verbindung mit dem Kolben 7 durchsetzenden Ventilschaft 6 des Hubventiles 3 zu umschließen, wobei die Rohrabschnitte 12, 13 der Anordnung einer Abdichtung 15 dienen. Erfindungsgemäß ist damit eine von der Brennkraftmaschine 4 entfernt überprüfbare Funktionseinheit einer pneumatischen Feder 1 geschaffen, die ohne Montage des Ventilschaftes 6 des Hubventiles 3 auf Dichtheit prüfbar ist.

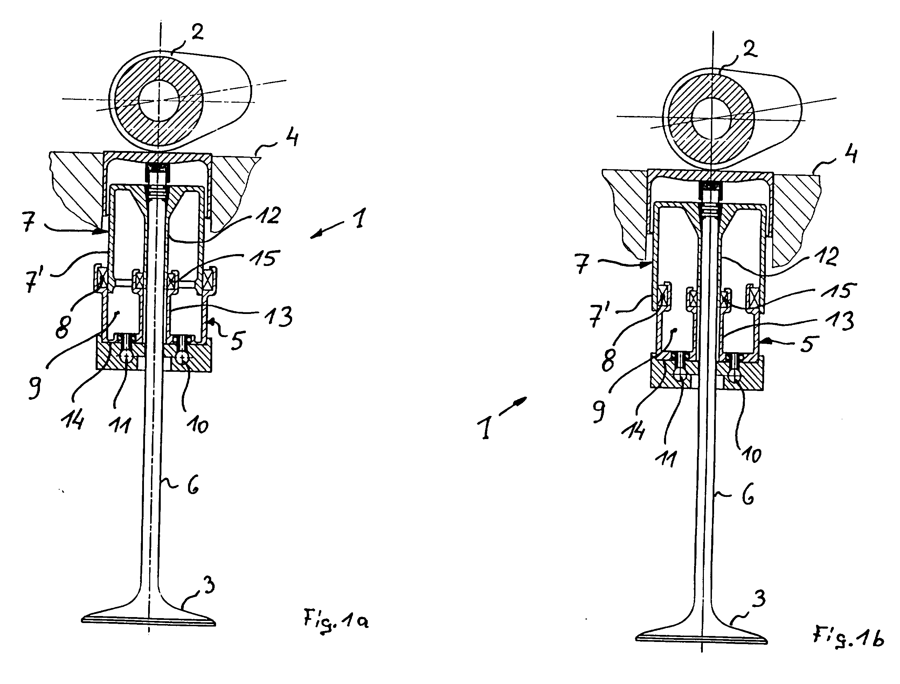

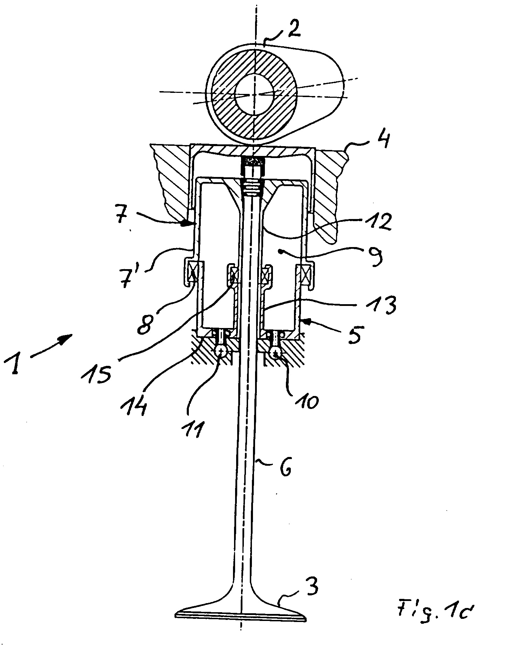

In den Figuren 1a, 1b und 1c ist jeweils der kolbenseitige Rohrabschnitt 12 in den zylinderseitigen Rohrabschnitt 13 ein- und ausfahrend angeordnet, wobei der kolbenseitige Rohrabschnitt 12 über den Außenumfang in gleitbeweglicher Verbindung mit der am zylinderseitigen Rohrabschnitt 13 fixiert angeordneten Abdichtung 15 steht. Weiter ist aus der Zeichnung zu ersehen, daß der topfartig gestaltete Kolben 7 mit seinem Kolbenhemd 7' gemäß Figur 1a außenumfänglich und nach Figur 1b über den Innenumfang mit der am Zylinder 5 fest angeordneten Dichtung 8 gleitbeweglich zusammenwirkt. Nach Figur 1c weist der topfartig gestaltete Kolben 7 im freien Endbereich seines Kolbenhemdes 7' die Dichtung 8 fest angeordnet auf, die mit dem Zylinder 5 außenumfänglich in gleitbeweglicher Verbindung steht.

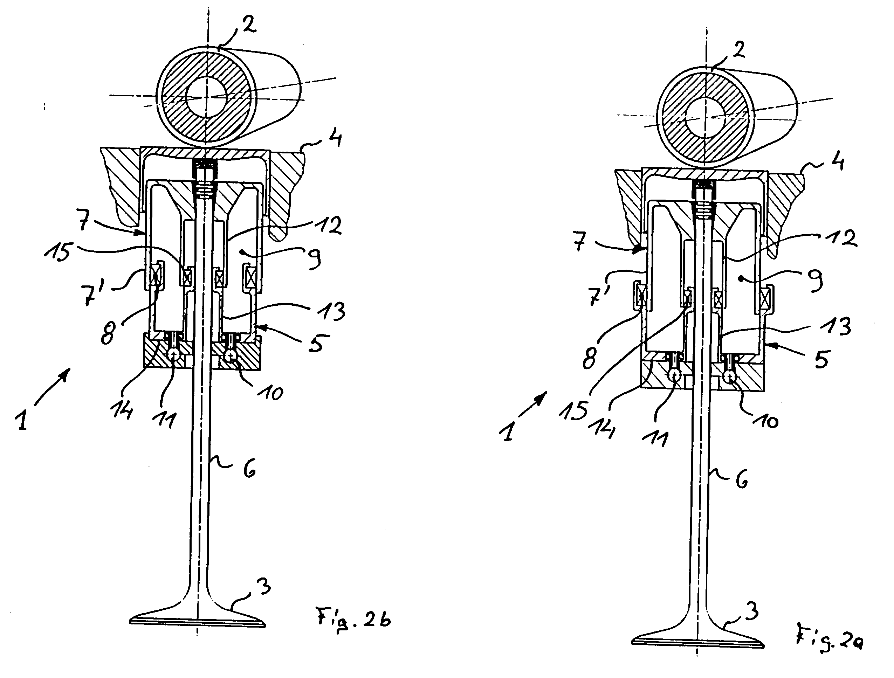

In den Figuren 2a und 2b ist jeweils der zylinderseitige Rohrabschnitt 13 in den kolbenseitigen Rohrabschnitt 12 ein- und ausfahrend angeordnet, wobei der kolbenseitige Rohrabschnitt 12 über den Innenumfang in gleitbeweglicher Verbindung mit der am zylinderseitigen Rohrabschnitt 13 fixiert angeordneten Abdichtung 15 steht. Schließlich wirkt der topfartig gestaltete Kolben 7 mit seinem Kolbenhemd 7' nach Figur 2a über den Außenumfang und nach Figur 2b innenumfänglich mit der am Zylinder 5 fest angeordneten Dichtung 8 gleitbeweglich zusammen.

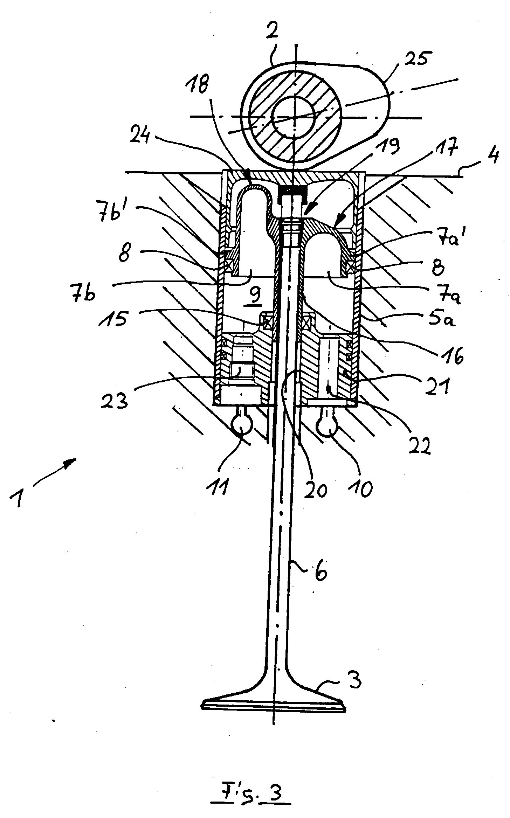

Die Figur 3 zeigte eine pneumatische Feder 1 mit jeweils in einem Halbschnitt gezeigten, unterschiedlich gestalteten Koben 7a und 7b, deren jeweiliges Kolbenhemd 7a' und 7b' mit dem Rohrabschnitt 16 aus Gründen der Festigkeit über verrundete Abschnitte 17 bzw. 18 in Verbindung steht. Der Verbindungsabschnitt 17 dient für eine kleinvolumige Kammer 9 der Feder 1 mit steiler Federkennlinie, wogegen der Verbindungsabschnitt 18 eine größervolumige Kammer 9 der Feder 1 bei ansonsten gleichen Konstruktionsabmessungen erlaubt für eine weniger steile Federkennlinie.

Wie die Figur 3 weiter zeigt, ist der Rohrabschnitt 16 jedes Kolbens 7a, 7b in einem freien Endbereich vom jeweiligen Kolbenhemd 7a', 7b' unverdeckt. Erreicht ist dies am einfachsten dadurch, daß das freie Ende jedes Kolbenhemdes 7a', 7b' in Richtung der formschlüssigen Verbindung 19 jedes Kolbens 7a, 7b mit dem Ventilschaft 6 zurückgesetzt ist. Mit dem auf diese Weise verkürzten Kolbenhemd 7a', 7b', das aus Fertigungs- und Montagegründen vorteilhafterweise die Dichtung 8 trägt, kann die mit der weiteren Abdichtung 15 zusammenwirkende Gleitoberfläche des Rohrabschnittes 16 in vorteilhafter Weise einfach und damit kostengünstig feinbearbeitet werden.

Wie die Figur 3 ferner zeigt, ist die zylinderseitig den Ventilschaft 6 umschließende und mit dem Rohrabschnitt 16 teleskopartig zusammenwirkende Wandung ein mit einer Durchbrechung 20 versehener Ventil-Sockel 21 des Zylinders 5a. Am Ventil-Sockel 21 ist kammerseitig die Abdichtung 15 gehalten angeordnet, so daß diese Teil der aus dem Rohrabschnitt 16 und dem Ventil-Sockel 21 mit der Durchbrechung 20 gebildeten inneren Begrenzung der Kammer 9 ist. Auch diese pneumatische Feder 1 ist somit vom Einsatzort in der Brennkraftmaschine gesondert auf ihre Funktion überprüfbar.

Vorteilhaft bei der Ausgestaltung nach Figur 3 ist ferner, daß ein im Weg der Zuleitung 10 im Ventil-Sockel 21 bei 22 angeordnetes Rückschlagventil und ein bei 23 vorgesehenes Überdruckventil (beide Ventile nicht gezeigt) mit in die Funktionsprüfung einbezogen sind.

Schließlich zeigt die Figur 3 auch, daß der Zylinder 5a über die der Schließstellung des Ventiles 3 entsprechende obere Hubstellung des Kolbens 7a, 7b hinaus verlängert ist zur gleitbeweglichen Aufnahme eines Tassenstößels 24, der unter der Wirkung des Nockens 25 der drehenden Steuerwelle 2 das Hubventil 3 in Öffnungsrichtung bewegt. Das in der Kammer 9 komprimierte Medium treibt das Hubventil 3 nach Erreichen des maximalen Hubes wieder in die Schließstellung zurück. Die Zusammenfassung der pneumatischen Feder 1 mit dem Tassenstößel 24 zu einer Montageeinheit ergibt einen einfachen Aufbau eines Zylinderkopfes der nicht näher gezeigten Brennkraftmaschine 4.

## Patentansprüche

1. Pneumatische Feder für Gaswechselventile von Brennkraftmaschinen,
- bei der ein Zylinder (5, 5a) und ein hubbeweglicher Kolben (7, 7a, 7b) mit einem Kolbenhemd unter Zwischenschaltung einer Dichtung (8) eine äußere Begrenzung einer einzigen Kammer (9) für ein kompressibles Gas bilden, und
- eine innere Begrenzung der Kammer (9) eine Wandung (13, 20) umfaßt, die an der kammerseitigen Stirnwand (14, 21) des Zylinders (5, 5a) vorgesehen ist und einen mit dem Kolben (7, 7a, 7b) antriebsfest verbindbaren, die Stirnwand (14, 21) durchsetzenden Ventilschaft (6) umschließt, wobei
- eine weitere Dichtung (15) die Kammer (9) dicht verschließt,
dadurch gekennzeichnet,
- daß die Wandung (13, 20) des Zylinders (5, 5a) und eine als des Kolbens (7, 7a, 7b) den Ventilschaft (6) umschließend unter Zwischenschaltung der weiteren Dichtung (15) miteinander teleskopartig Rohrabschnitt (12, 16) ausgeführte innere Wandung zusammenwirkend die innere Begrenzung der Kammer (9) bilden.

2. Pneumatische Feder nach Anspruch 1, dadurch gekennzeichnet,
- daß der kolbenseitige Rohrabschnitt (12) in einen zylinderseitigen Rohrabschnitt (13) ein- und ausfahrend angeordnet ist, wobei
- der kolbenseitige Rohrabschnitt (12) mit dem Außenumfang in gleitbeweglicher Verbindung mit der am zylinderseitigen Rohrabschnitt (13) fixiert angeordneten Abdichtung (15) steht (Figur 1a, 1b, 1c).

3. Pneumatische Feder nach Anspruch 1, dadurch gekennzeichnet,
- daß ein zylinderseitiger Rohrabschnitt (13) in den kolbenseitigen Rohrabschnitt (12) ein- und ausfahrend angeordnet ist, wobei
- der kolbenseitige Rohrabschnitt (12) mit dem Innenumfang in gleitbeweglicher Verbindung mit der am zylinderseitigen Rohrabschnitt (13) fixiert angeordneten Abdichtung (15) steht (Figur 2a, 2b).

4. Pneumatische Feder nach Anspruch 2 oder 3, dadurch gekennzeichnet, daß der topfartig gestaltete Kolben (7) mit dem Kolbenhemd (7') mit dem Außen- oder Innenumfang mit der am Zylinder (5) fest angeordneten Dichtung (8) gleitbeweglich zusammenwirkt (Figur 1a, 1b; 2a, 2b).

5. Pneumatische Feder nach Anspruch 2 oder 3, dadurch gekennzeichnet,
- daß der topfartig gestaltete Kolben (7, 7a, 7b) im freien Endbereich seines Kolbenhemdes (7', 7a', 7b') die Dichtung (8) fest angeordnet aufweist, die
- mit dem Außen- oder Innenumfang des Zylinders (5, 5a) in gleitbeweglicher Verbindung steht (Figuren 1c, 3).

6. Pneumatische Feder nach einem oder mehreren der Ansprüche 1 bis 5, dadurch gekennzeichnet, daß der Kolben (7a, 7b) den Rohrabschnitt (16) im freien Endbereich vom Kolbenhemd (7a', 7b') unverdeckt aufweist.

7. Pneumatische Feder nach den Ansprüchen 1 - 6, dadurch gekennzeichnet, daß der Kolben (7a, b) ein in der axialen Erstreckung relativ zum Rohrabschnitt (16) kürzer gewähltes Kolbenhemd (7a', 7b') aufweist.

8. Pneumatische Feder nach den Ansprüchen 1 - 7, dadurch gekennzeichnet, daß der Kolben (7a, 7b) insbesondere im freien Endabschnitt des kurzen Kolbenhemdes (7a', 7b') die Dichtung (8) trägt.

9. Pneumatische Feder nach den Ansprüchen 1 - 8, dadurch gekennzeichnet,
- daß die mit dem kolbenseitigen Rohrabschnitt (16) zusammenwirkende zylinderseitige Wandung von einem mit einer Durchbrechung (20) versehenen Ventil-Sockel (21) des Zylinders (5a) gebildet ist, wobei
- am Ventil-Sockel (21) die weitere Abdichtung (15) angeordnet ist.

10. Pneumatische Feder nach einem oder mehreren der Ansprüche 1 - 9, dadurch gekennzeichnet, daß der Zylinder (5a) in seinem freien Endabschnitt der Führung des Kolbens (7a, 7b) und eines mit dem Ventilschaft (6) in Antriebsverbindung stehenden Stößels (24) dient.

## Claims

1. A pneumatic spring for gas change valves of internal combustion engines,
- wherein a cylinder (5, 5a) and a piston (7, 7a, 7b) movable in reciprocation and having a piston shell form an outer boundary, with interposition of a seal (8), of a single chamber (9) for a compressible gas and
- an inner boundary of the chamber (9) comprises a wall (13, 20) which is provided on the chamber-side end wall (14, 21) of the cylinder (5, 5a) and comprises a valve stem (6) which extends through the end wall (14, 21) and is connectable to and integrally drivable with the piston (7, 7a, 7b), wherein
- another seal (15) tightly closes the chamber (9),
characterised in that
- the wall (13, 20) of the cylinder (5, 5a) and an inner wall in the form of a tube portion (12, 16) and belonging to the piston (7, 7a, 7b) surround the valve shank (6), co-operate telescopically with one another with interposition of the additional seal (15), and constitute the inner boundary of the chamber (9).

2. A pneumatic spring according to claim 1, characterised in that
- the piston-side tube portion (12) is disposed so as to be retractable and extendible in a cylinder-side tube portion (13), wherein
- the outer periphery of the piston-side tube portion (12) is slidably connected to the seal (15) fixed on the cylinder-side tube portion (13) (Figures 1a, 1b, 1c).

3. A pneumatic spring according to claim 1, characterised in that
- a cylinder-side tube portion (13) is disposed so as to be retractable and extendible in the piston-side tube portion (12), wherein
- the inner periphery of the piston-side tube portion (12) is slidably connected to the seal (15) fixed to the cylinder-side tube portion (13) (Figures 2a, 2b).

4. A pneumatic spring according to claim 2 or claim 3, characterised in that the outer or inner periphery of the piston (7), which is pot-shaped and has the shell (7'), co-operates in slidable manner with the seal (8) fixed on the cylinder (5) (Figures 1a, 1b; 2a, 2b).

5. A pneumatic spring according to claim 2 or claim 3, characterised in that
- the free end region of the shell (7', 7a', 7b') of the pot-shaped piston (7, 7a, 7b) has the seal (8) fixed in it,
- the seal being connected in slidable manner to the outer or inner periphery of the cylinder (5, 5a).

6. A pneumatic spring according to one or more of claims 1 to 5, characterised in that the piston (7a, 7b) comprises the tube portion (16) uncovered in the free end region of the shell (7a', 7b').

7. A pneumatic spring according to claims 1 - 6, characterised in that the piston (7a, b) has a shell (7a', 7b') which in axial extent is shorter than the tube portion (16).

8. A pneumatic spring according to claims 1 - 7, characterised in that the piston (7a, 7b) carries the seal (8) especially in the free end region of the short shell (7a', 7b').

9. A pneumatic spring according to claims 1 - 8, characterised in that
- the cylinder-side wall co-operating with the piston-side tube portion (16) is formed by a valve base (21) of the cylinder (5a) formed with an aperture (20), wherein
- the additional seal (15) is disposed on the valve base (21).

10. A pneumatic spring according to one or more of claims 1 - 9, characterised in that the free end portion of the cylinder (5a) is for guidance of the piston (7a, 7b) and of a push rod connected for drive purposes to the valve stem (6).

## Revendications

1. Ressort pneumatique pour des soupapes d'échanges gazeux de moteurs à combustion interne,
• dans lequel un cylindre (5, 5a) et un piston alternatif (7, 7a, 7b) forment avec une chemise de piston en interposant un joint d'étanchéité (8) une délimitation extérieure, d'une chambre unique (9) pour un gaz compressible, et
• une limitation intérieure de la chambre (9) comprend une cloison (13, 20) prévue sur la paroi frontale (14, 21) côté chambre du cylindre (5, 5a) et entoure la queue de soupape (6) traversant la paroi frontale (14, 21) et pouvant être reliée à l'entraînement fixe au piston (7, 7a, 7b),
• un autre joint d'étanchéité (15) ferme la chambre (9) de façon étanche,
caractérisé en ce que
• la paroi (13, 20) du cylindre (5, 5a) et une paroi intérieure réalisée sous la forme de la section tubulaire (12, 16) du piston (7, 7a, 7b) forment, en coopérant et s'entourant l'une l'autre de manière télescopique en interposant l'autre joint d'étanchéité (15), la délimitation intérieure de la chambre (9).

2. Ressort pneumatique selon la revendication 1,
caractérisé en ce que
• la section tubulaire (12) qui est située du côté du piston est disposée en entrant et en sortant dans la section tubulaire (13) qui est située du côté du cylindre,
• la section tubulaire (12) qui est située du côté du piston, étant en liaison mobile glissante par son pourtour extérieur avec le joint d'étanchéité (15) qui est disposé de façon fixe sur la section tubulaire (13) qui se trouve du côté du cylindre. (figure 1a, 1b, 1c).

3. Ressort pneumatique selon la revendication 1,
caractérisé en ce que
• une section tubulaire (13) qui est située du côté du cylindre, est disposée en entrant et en sortant dans la section tubulaire (12) qui est située du côté du piston,
• la section tubulaire (12) qui est située du côté du piston, étant en liaison mobile glissante par son pourtour intérieur avec le joint d'étanchéité (15), disposé de façon fixe sur la section tubulaire (13) du côté du cylindre (figures 2a, 2b).

4. Ressort pneumatique selon la revendication 2 ou 3,
caractérisé en ce que
le piston (7), en forme d'un pot, coopère par la chemise (7') par le pourtour extérieur et intérieur avec le joint d'étanchéité (8) disposé de façon fixe sur le cylindre (5) (figures la, 1b ; 2a, 2b)

5. Ressort pneumatique selon la revendication 2 ou 3,
caractérisé en ce que
le piston (7, 7a, 7b), en forme d'un pot, présente dans la zone terminale libre de sa chemise (7', 7a', 7b') le joint d'étanchéité (8) disposé de façon fixe qui est en liaison mobile glissante au pourtour extérieur ou intérieur du cylindre (5, 5a) (figures 1c, 3).

6. Ressort pneumatique selon une ou plusieurs des revendications 1 à 5,
caractérisé en ce que
le piston (7a, 7b) présente la section tubulaire (16) qui n'est pas recouverte dans la zone terminale libre par la chemise (7a', 7b').

7. Ressort pneumatique selon les revendications 1 à 6,
caractérisé en ce que
le piston (7a, 7b) présente une chemise (7a', 7b') qui est choisie de façon plus courte dans l'étendue axiale par rapport à la section tubulaire (16).

8. Ressort pneumatique selon les revendications 1 à 7,
caractérisé en ce que
le piston (7a, 7b) porte le joint d'étanchéité (8) en particulier dans la section terminale libre de la courte chemise (7a', 7b')

9. Ressort pneumatique selon les revendications 1 à 8,
caractérisé en ce que
• la paroi qui est située du côté du cylindre, et qui coopère avec la section tubulaire (16) située du côté du piston, est constituée par un socle (21) du cylindre (5a), pourvu d'un ajour (20),
• l'autre joint d'étanchéité (15) étant disposé sur le socle (21).

10. Ressort pneumatique selon une ou plusieurs des revendications 1 à 9,
caractérisé en ce que
le cylindre (5a) sert par sa section terminale libre au guidage du piston (7a, 7b) et au guidage d'un poussoir (24) qui est en liaison d'entraînement avec la queue de la soupape (6).
